# EUROPEAN PATENT SPECIFICATION

(11) **EP 1 666 517 B1**
(45) Date of publication and mention of the grant of the patent: **12.03.2008**
(21) Application number: 05257361.5
(22) Date of filing: 30.11.2005
(51) Int. Cl.: C08G 63/06, B32B 27/36, B32B 27/08

(54) **Shaped article**
geformter Artikel
Article moulé

(30) Priority: 02.12.2004 JP 2004349580; 27.12.2004 JP 2004375933
(43) Date of publication of application: 07.06.2006
(73) Proprietor: Sumitomo Chemical Company, Limited, Tokyo 104-8260 (JP)
(72) Inventor: Yamashita, Yasuhiro, Tsukuba-shi Ibaraki (JP); Matsumi, Shino, Tsukuba-shi Ibaraki (JP); Kumada, Hiroaki, Inashiki-gun Ibaraki (JP); Yamaguchi, Takanari, Tsukuba-shi Ibaraki (JP)
(74) Representative: Duckworth, Timothy John

(56) References cited:
- EP-A- 0 503 063
- EP-A- 0 503 065
- EP-A- 0 742 267
- EP-A- 0 911 148
- EP-A- 1 059 162
- US-B1- 6 268 419
- DATABASE WPI Section Ch, Week 200377 Derwent Publications Ltd., London, GB; Class A14, AN 2003-833471 XP002370654 & WO 03/078488 A1 (MITSUI CHEM INC) 25 September 2003 (2003-09-25)

## Description

### BACKGROUND OF THE INVENTION

### FIELD OF THE INVENTION

The present invention relates to a shaped article such as molded multi-layer article comprising two or more thermoplastic resin layers and one or more adhesive layers, film, tube and blow molding article.

### DESCRIPTION OF THE RELATED ART

Recently, for food, drink, industrial chemical or cosmetic applications, there have been used molded resin vessels, which are lightweight and have gas-barrier or organic solvent-barrier properties. In the field of the automotive industry, a plastic gas tank has been strongly demanded from the market in the points of lightweight, moldability, strength and flexibility in design, and studied for a long time. For example, molded vessels comprising a resin such as ethylene-vinyl alcohol copolymer, vinylidene chloride, or poly(ethylene terephthalate) in a barrier layer have been known. However, molded vessels obtained by blow molding those resins cannot exhibit sufficient gas-barrier property against gasoline fuel containing low molecular weight alcohol that is commonly widely used.

On the other, it has been known that a thermotropic liquid crystal polymer such as liquid crystal polyester has heat resistance and excellent gas-barrier properties. However, the liquid crystal polyester is unlike crystalline polyesters such as poly(ethylene terephthalate) and poly(butylene terephthalate). Since molecules thereof are rigid and therefore not in a tangle with each other at molten sate, they form poly-domains having a liquid crystal state. The liquid crystal polyester has low malt viscosity due to behavior of molecular chain to be extremely oriented along with the flowing direction by low shearing and has large anisotropy. Accordingly, a tank or tube obtained by extrusion processing, especially blow molding the liquid crystal polyester, does not always have sufficient property such as its appearance.

Considering the situation, JPNo. 08-301983Ahas disclosed that by using a specific liquid crystal polyester resin composition, a blowmolded article made of liquid crystal polymer can be obtained. JP No. 09-136391A has disclosed that by using similar liquid crystal polyester resin composition, ablowmolded article having multi-layer of liquid crystal polymer and a thermoplastic resin other than the liquid crystal polymer can be obtained.

However, according to the study by the present inventors, such a blow molded article having a multi-layer structure as obtained in JPNo. 09-136391A does not have a sufficient strength.

Further, liquid crystal polyester is expected to be a row material for film from the industrial viewpoint because the polyester have been well-know to have high strength, high elasticity and high heat resistance as well as excellent gas-barrier property resulting from its strong strength of molecular Interaction and molecular orientation (JP2001-106809A).

As mentioned above, however, molecules of liquid crystal polyester are more rigid than polyethylene terephthalate or polybutylene terephthalate, and when the polymerization reaction is carried out completely, the molding temperature of the obtained polymer is too high. In order to obtain a liquid crystal polyester having lower molding temperature, the polymerization reaction is quitted before the completion of the reaction. However, this provide a polymer containing a lot of unreacted materials derived from monomers, and resulting in the film, sheet, blow molding article, or tube shaped article having a deteriorated surface caused by decomposition foaming of unreacted materials or oligomer. This phenomena is sometimes occurred in the case of whole aromatic liquid crystal polyester as mentioned in JP2001-106809A.

An object of the present invention is to provide a shaped article such as a molded multi-layer article having a layer of liquid crystal polymer being excellent in strength, or film or blow molding article having excellent appearance.

### SUMMARY OF THE INVENTION

The present invention provides a shaped article comprising a liquid crystal polyester containing not more than 500 ppm of oligomer made up of five or less monomers.

The present invention also provides a shaped article comprising two or more thermoplastic resin layers and one or more adhesive layers, wherein at least one of the thermoplastic resin layers is a layer (A) comprising a liquid crystal polyester containing not more than 500 ppm of oligomer made up of five or less monomers, at least one of the thermoplastic resin layers is a layer (B) comprising thermoplastic resin other than the liquid crystal polymer, and the layer (A) and the layer (B) are stacked via an adhesive layer (C) comprising an epoxy group-containing ethylene copolymercomprising:
(a) 50 to 99% by weight of ethylene units;
(b) 0.1 to 30% by weight of unsaturated carboxylic acid glycidyl ester units and/or unsaturated glycidyl ether units; and
(c) 0 to 50% by weight of (meth)acrylate units.

### DETAILED DESCRIPTION OF THE PREFERRED EXAMPLES

The liquid crystal polyester used in the present invention is a thermotropic liquid crystal polyester containing not more than 500 ppm of oligomer made up of five or less monomers, and preferably is a liquid crystal polyester including:
(1) polyester obtained by reaction of an aromatic dicarboxylic acid, an aromatic diol and an aromatic hydroxycarboxylic acid:
(2) polyester obtained by reaction with different aromatic hydroxycarboxylic acids;
(3) polyester obtained by reaction of an aromatic dicarboxylic acid and an aromatic diol; and
(4) polyester obtained by reaction of a crystalline polyester such as poly(ethylene terephthalate) and an aromatic hydroxycarboxylic acid,
   which usually forms an optically anisotropic melted body at a temperature of not more than 400°C. Examples of the liquid crystal polyester include wholly aromatic and partially aromatic polyesters and the like. Wholly aromatic liquid crystal polyester is preferable.

In place of the aromatic dicarboxylic acid, aromatic diol and aromatic hydroxycarboxylic acid, ester derivatives thereof may also be used. Further, the aromatic dicarboxylic acid, aromatic diol and aromatic hydroxycarboxylic acid substituted with a halogen atom, alkyl group, aryl group or the like at their aromatic ring moieties may also be used.

Examples of the repeating unit of the liquid crystal polyester include, but not limited to: (1) repeating unit derived from an aromatic dicarboxylic acid; (2) repeating unit derived from an aromatic diol; and (3) repeating unit derived from an aromatic hydroxycarboxylic acid; as the follows.
(1) The repeating unit derived from an aromatic dicarboxylic acid: 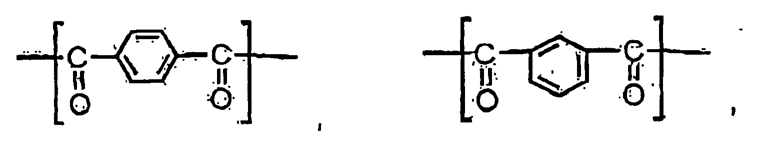 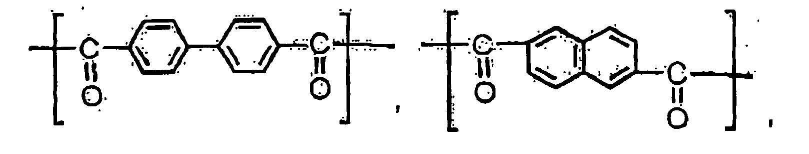 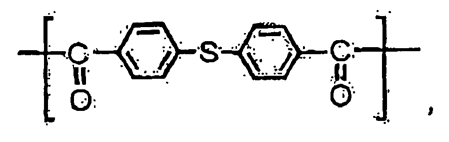 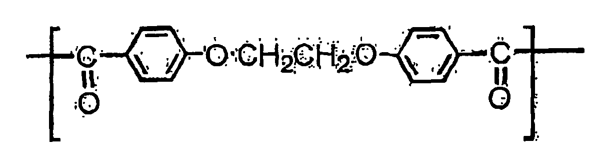 wherein aromatic rings in these units may be substituted with a halogen atom, alkyl group, aryl group or the like.
(2) The repeating unit derived from an aromatic diol: 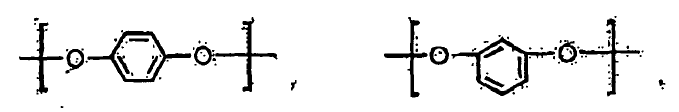 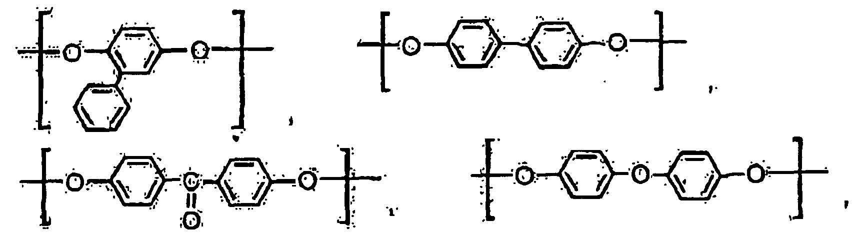 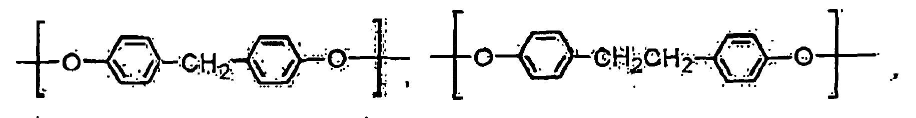 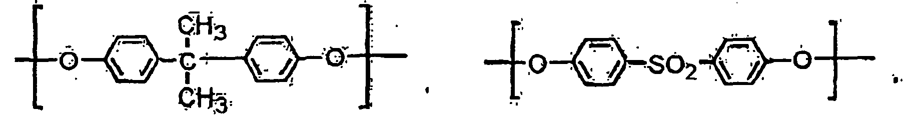 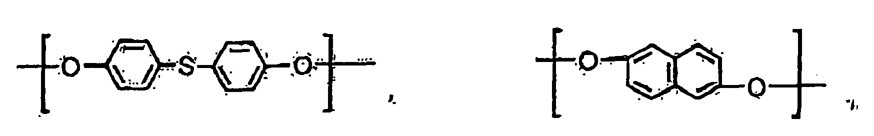 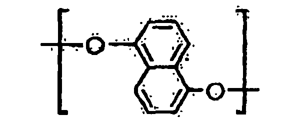 wherein aromatic rings in these units may be substituted with a halogen atom, alkyl group, aryl group or the like.
(3) The repeating unit derivedfroman aromatichydroxycarboxylic acid: 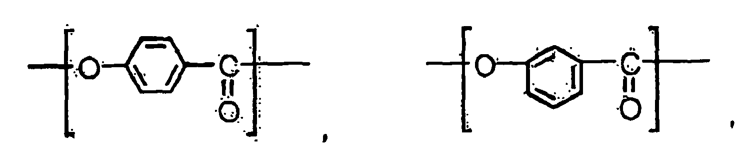 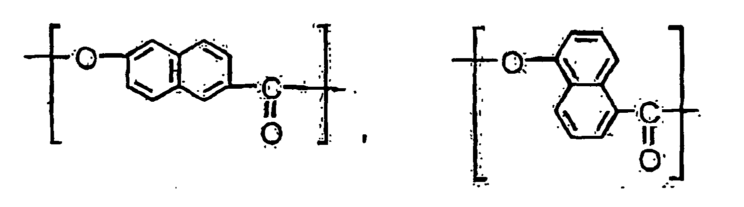
wherein aromatic rings in these units may be substituted with a halogen atom, alkyl group, aryl group or the like.

The liquid crystal polyester, which is particularly preferred in view of a balance between heat resistance, mechanical characteristics and processability, comprises repeating structural units: 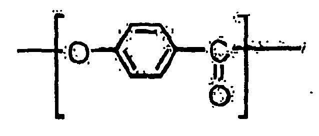 and further preferably comprises at least 30% by mol, based on the total, of the repeating structural units. Specifically, polyesters whose combination of repeating structural units are preferably any of the following (I)-(VI). In view of moisture resistant, a wholly aromatic polyester selected from (I)-(III) and (V)-(VI) is more preferred.

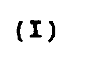

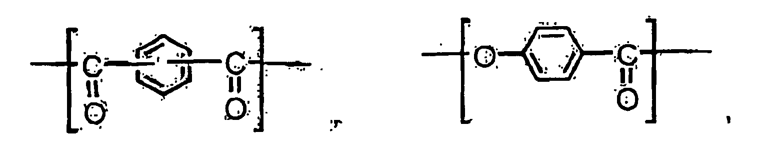

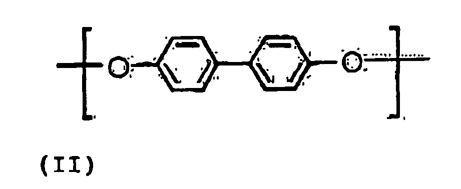

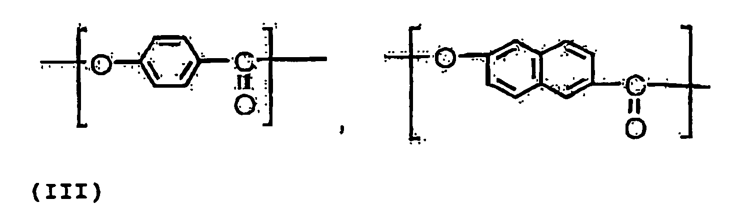

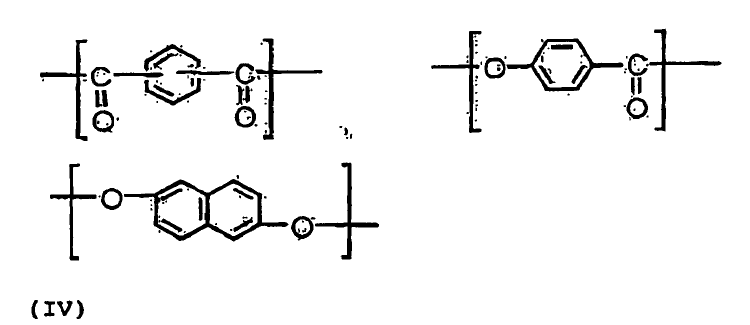

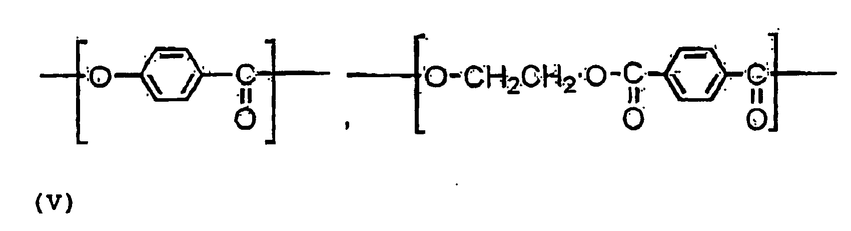

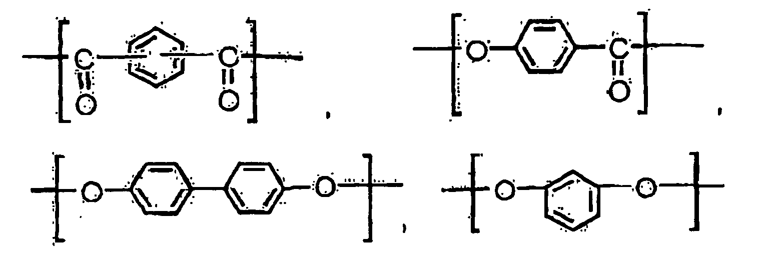

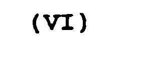

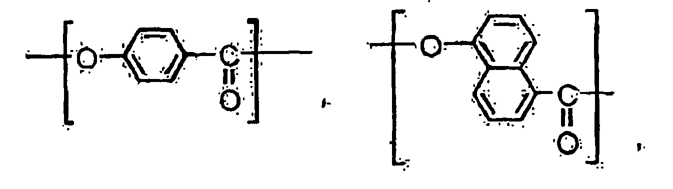

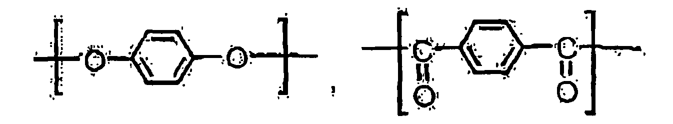

The liquid crystal polyester having a combination of (I)-(VI) can be produced as described, for example, in JP No. 47-47870B, JP No. 63-3888B, JP No. 63-3891B, JP No. 56-18016B and JA No. 02-51523A. Among them, the combination with (I), (II) or (V) is preferred and that with (I) or (III) is more preferred.

In the present invention, when the liquid crystal polyester is used for multi-layer article mentioned later, there can be preferably used a liquid crystal polyester comprising 30 to 80% by mol of the following repeating units (a'), 0 to 10% by mol of the following repeating units (b'), 10 to 25% by mol of the following repeating units (c') and 10 to 35% by mol of the following repeating units (d'), for the field where high heat resistance is required. 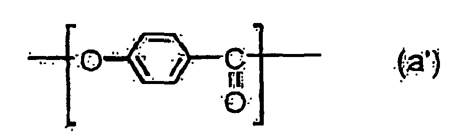 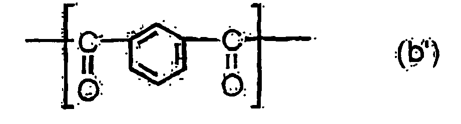 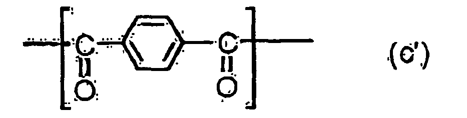 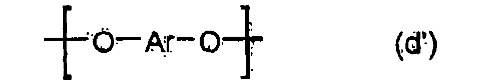 wherein Ar represents a divalent aromatic group.

The divalent aromatic group in the repeating unit (d') is preferably the divalent aromatic group in the aromatic group described above. For the field where specifically high heat resistance is required, a wholly aromatic diol is preferred.

In the present invention, there is more preferably used a liquid crystal polyester particularly having a combination of only carbon, hydrogen, and oxygen among combinations required for the field where disposability such as incineration after use is required in view of environmental problems and the like.

A liquid crystal polyester used in the present invention contains not more than 500 ppm in weight of oligomer made up of five or less monomers. In this invention, "oligomer made up of five or less monomers" is defined as oligomer include monomer, dimmer, trimer, tetramer or pentamer of the repeating unit constituting the liquid crystal polyester. By using such liquid crystal polyester, a shaped article such as film, tube or a blow molding article having excellent appearance is obtained resulting from suppressing foaming occurred during molding process. The preferable amount of oligomer made up of five or less monomers is not more than 400 ppm, more preferable is 300 ppm in weight.

The method of determining the oligomers is the method (iv) described in the EXAMPLES mentioned later.

The method for producing a liquid crystal polyester containing not more than 500 ppm in weight of oligomer made up of five or less monomers used in the present invention includes, for example, a extraction of oligomer made up of five or less monomers by solvent, a heat treatment under gas stream during the production process of liquid crystal polyester, a kneading with degassing of a liquid crystal polyester, a washing treatment of a liquid crystal polyester by using a solvent dissolving only the oligomer made up of five or less monomers, and a elimination treatment by using such chemical agent that combine oligomers made up of five or less monomers and oligomers made up of more than five monomers. These methods may apply repeatedly or in combination.

The heat treatment under gas stream include, for example, a heat treatment conducted under inactive gas such as nitrogen or argon at the rate of from 2.5 to 100 % by volume of a furnace used for drying per minute at the temperature of vaporizing the oligomers made up of not more than five monomers.

The kneading with degassing of a liquid crystal polyester include, for example, a kneading with single or twin screw extruder under sufficient low pressure and temperature, and preferably, a kneading with degassing at the sufficient high temperature for melt-kenading and reduced pressure of not more than 0.05 mpa.

A multi-layer article of the present invention comprises the liquid crystal polyester as mentioned above. In one embodiment, the layer (A) comprises a liquid crystal polyester resin composition (D) comprising a liquid crystal polyester (A-1) as a continuous phase and a copolymer (D-1) reactive with the liquid crystal polyester as a dispersion phase.

An epoxy group-containing ethylene copolymer used in the adhesive layer (C) in the multi-layer article of the present invention is a copolymer comprising, or consisting of, the following (a) to (c):
(a) 50 to 99% by weight of ethylene units;
(b) 0.1 to 30% by weight of unsaturated carboxylic acid glycidyl ester units and/or unsaturated glycidyl ether units; and
(c) 0 to 50% by weight of (meth)acrylate units.

More preferably, it is a copolymer comprising, or consisting of, the following (a) to (c):
(a) 55 to 98% by weight of ethylene units;
(b) 0.5 to 20% by weight of unsaturated carboxylic acid glycidyl ester units and/or unsaturated glycidyl ether units; and
(c) 0 to 45 % by weight of (meth)acrylate units.

Contents of (a) to (c) are represented based on the total of (a) to (c) as 100% by weight.

The unsaturated carboxylic acid glycidyl ester unit and the unsaturated glycidyl ether unit is represented by, for example, the formula: 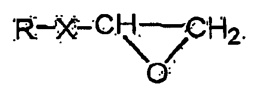 wherein, R represents a C₂₋₁₃ hydrocarbon group having an ethylenically unsaturated bond, and X represents -C(0)0-, -CH₂-O- or

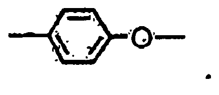

Examples of the unsaturated carboxylic acid glycidyl ester include glycidyl acrylate, glycidyl me thacrylate, itaconic acid diglycidyl ester, butenetricarboxylic acid triglycidyl ester and p-styrenecarboxylic acid glycidyl ester and the like. Particularly, glycidyl methacrylate is preferable.

Examples of the unsaturated glycidyl ether include vinyl glycidyl ether, allyl glycidyl ether, 2-methylallyl glycidyl ether, methacryl glycidyl ether and styrene-p-glycidyl ether and the like.

The (meth)acrylate in (C) is an ester obtained from acrylic acid or methacrylic acid, and alcohol. The alcohol is preferably C₁₋₈ alcohol. Specific examples of the (meth)acrylate include methyl acrylate, ethyl acrylate, methyl methacrylate, ethyl methacrylate, n-butyl acrylate, n-butyl methacrylate, t-butyl acrylate, t-butyl methacrylate, 2-ethylhexyl acrylate, 2-ethylhexyl methacrylate and the like. Particularly, methyl acrylate and ethyl acrylate are preferable. The (meth)acrylates may be used alone or in combination of two or more of them.

Specific examples of the epoxy group-containing ethylene copolymer include copolymer comprising ethylene units and glycidyl methacrylate units, copolymer comprising ethylene units, glycidyl methacrylate units and methyl acrylate units, copolymer of ethylene units, glycidyl methacrylate units and ethyl acrylate units, and the like.

A melt index (hereinafter referred to as "MFR" , measured at 190°C under a load of 2.16 kg according to JIS K 6760) of the epoxy group-containing ethylene copolymer is preferably from 0. 5 to 100 g/10 minutes, more preferably from 2 to 50 g/10 minutes. The melt index may not be within the above range. However, when the melt index is higher than the range, mechanical characteristics of the resultant composition are not preferred. On the other hand, when the melt index is less than the range, it is unfavorable in the point of adhesion.

The epoxy group-containing ethylene copolymer has a stiffness modulus preferably within the range of 10 to 1300 kg/cm², and more preferably 20 to 1100 kg/cm². When the stiffness modulus is not within this range, the moldability and mechanical properties of the resultant composition may be insufficient.

The component (D-1) used in the layer of the liquid crystal polyester resin composition (D) is a copolymer having a functional group reactive with the liquid crystal polyester. The functional group reactive with the liquid crystal polyester has no specific limitation as long as it is reactive with the liquid crystal polyester, including an oxazolyl group, an epoxy group, an amino group and the like. An epoxy group is preferable.

The epoxy group may present as a part of other functional group. Example of such a functional group includes a glycidyl group.

In the component (D-1), any known method can be used without specific limitation for introducing such functional group to the copolymer. For example, at the stage of producing the copolymer, a monomer having the functional group may be introduced by copolymerization, or may be graft-copolymerized with the copolymer.

A monomer having a functional group reactive with the liquid crystal polyester, particularly having a glycidyl group is preferably used. As the monomer having a glycidyl group, preferably used are an unsaturated carboxylic acid glycidyl ester and/or an unsaturated glycidyl ether represented by,for example, the formula: 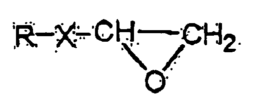 wherein R represents C₂₋₁₃ hydrocarbon group having an ethylenically unsaturated bond, and X represent -C(O)O-, -CH₂-O- or

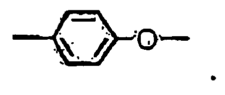

Examples of the unsaturated carboxylic acid glycidyl ester include glycidyl acrylate, glycidyl methacrylate, itaconic acid diglycidyl ester, butenetricarboxylic acid triglycidyl ester and p-styrenecarboxylic acid glycidyl ester and the like-Particularly, glycidyl methacrylate is preferable.

Examples of the unsaturated glycidyl ether include vinyl glycidyl ether, allyl glycidyl ether, 2-methylallyl glycidyl ether, methacryl glycidyl ether, styrene-p-glycidyl ether and the like.

The copolymer (D-1) reactive with the liquid crystal polyester is preferably a copolymer having an unsaturated carboxylic acid glycidyl ester unit and/or an unsaturated glycidyl ether unit, a content of which in the copolymer is preferably 0.1 to 30% by weight.

The copolymer (D-1) reactive with the liquid crystal polyester may also be a thermoplastic resin or a rubber, or may be a mixture of the thermoplastic resin and the rubber.

Preferably, the copolymer (D-1) reactive with the liquid crystal polyester is a copolymer having a heat of melting of crystal of less than 3 J/g.

The copolymer (D-1) preferably has a Mooney viscosity of 3 to 70, more preferably 3 to 30, and particularly preferably 4 to 25.

In the case where D-1 is rubber, the Mooney viscosity as used herein refers a value measured with a large rotor at 100°C, according to JIS K 6300.

When the viscosity is not within the above range, heat stability and flexibility of the resultant composition may be decreased, and it is unfavorable.

Any known method can be used without specific limitation for introducing a functional group reactive with the liquid crystal polyester to the rubber. For example, at the stage of producing the rubber, a monomer having the functional group may be introduced by copolymerization, or may be graft-copolymerized with the copolymer.

Examples of the rubber having an epoxy group as a specific example of the copolymer (D-1) reactive with the liquid crystal polyester include, (meth)acrylate-ethylene-(unsaturated carboxylic acid glycidyl ester and/or unsaturated glycidyl ether) copolymer rubber.

(Meth)acrylate is an ester obtained from acrylic acid or methacrylic acid with an alcohol. The alcohol preferably has 1 to 8 carbon atoms. Specific examples of the (math)acrylate include methyl acrylate, ethyl acrylate, methyl methacrylate, ethyl methacrylate, n-butyl acrylate, n-butyl methacrylate, t-butyl acrylate, t-butyl methacrylate, 2-ethylhexyl acrylate, 2-ethylhexyl methacrylate and the like. Particularly, methyl acrylate and ethyl acrylate are preferable. As the (meth)acrylate, those may be used alone or in combination of two or more of them.

In the copolymer rubber, the (math)acrylate unit content is preferablymore than 40% by weight and less than 97 % by weight. more preferably 45 to 70% by weight; the ethylene unit content is preferably from 3% by weight to less than 50% by weight, more preferably 10 to 49% by weight; and the unsaturated carboxylic acid glycidyl ether unit and/or the unsaturated glycidyl ether unit content is preferably 0.1 to 30% by weight, more preferably 0.5 to 20% by weight.

When the contents thereof are not within the above ranges, heat stability and mechanical characteristics of the resultant molded article such as film and sheet may be insufficient, and it is unfavorable.

The copolymer rubber can be produced by the standard method such as mass polymerization, emulsion polymerization and solution polymerization with a free radical initiator. Typical polymerization methods are described in JP No. 48-11388A, and JP No. 61-127709A and the like, and according to those method, the copolymer rubber can be produced in the presence of a polymerization initiator that producing a free radical under conditions of a pressure of not less than 500 kg/cm² and a temperature of 40 to 300°C.

Other examples of the rubber used in the copolymer (D-1) include an acrylic rubber having a functional group reactive with the liquid crystal polyester and a vinyl aromatic hydrocarbon compound-conjugated diene compound block copolymer rubber having a functional group reactive with the liquid crystal polyester.

Preferably, the acrylic rubber consists mainly of at least one monomer selected from compounds represented by formulae (1) to (3):

CH₂ = CH-C(O)-OR¹ (1)

CH₂ = CH-C(O)-OR²OR³ (2)

CH₂ = CR⁴H-C(O)-O(R⁵(C(O)O)nR⁶ (3)

wherein R¹ represents a C₁₋₁₈ alkyl group or cyanoalkyl group; R² represents a C₁₋₁₂ alkylene group; R³ represents a C₁₋₁₂ alkyl group; R⁴ represents a hydrogen atom or methyl group; R⁵ represents a C₃₋₃₀ alkylene group; R⁶ represents a C₁₋₂₀ alkyl group or derivative thereof; and n represents an integer of 1 to 20.

Specific examples of the acrylic acid alkyl ester represented by the formula (1) include methyl acrylate, ethyl acrylate, propyl acrylate, butyl acrylate, pentyl acrylate, hexyl acrylate, octyl acrylate, 2-ethylhexyl acrylate, nonyl acrylate, decyl acrylate, dodecyl acrylate and cyanoethyl acrylate and the like.

Examples of the acrylic acidalkoxyalkyl ester represented by the formula (2) include methoxyethyl acrylate, ethoxyethyl acrylate, butoxyethyl acrylate and ethoxypropyl acrylate and the like. One or more of them may be used in the acrylic rubber as a main component.

As a component of the acrylic rubber, an unsaturated monomer can be used according to need, which is capable of copolymerizing with at least one monomer selected from compounds represented by the above formulae (1) to (3).

Examples of the unsaturated monomer include styrene, α-methylstyrene, acrylonitrile, halogenated styrene, methacrylonitrile, acrylamide, methacrylamide, vinylnaphthalene, N-methylolacrylamide, vinyl acetate, vinyl chloride, vinylidene chloride, benzyl acrylate, methacrylic acid, itaconic acid, fumaric acid, maleic acid and the like.

A preferred component ratio in the acrylic rubber having a functional group reactive with the liquid crystal polyester is 40.0 to 99.9% by weight of at least one monomer selected from compounds represented by the above formulae (1) to (3), 0.1 to 30.0% by weight of the unsaturated carboxylic acid glycidyl ester and/or the unsaturated glycidyl ether and 0.0 to 30.0% by weight of the unsaturated monomer copolymerizable with at least one monomerselectedfrom compounds represented by the above formulae (1) to (3).

When the component ration in the acrylic rubber is within the above range, heat resistance, impact resistance and moldability of the resultant composition are good, and it is favorable.

Any method for producing the acrylic rubber can be used without specific limitation, and known polymerization methods such as those described in JP No. 59-113010A, JP No. 62-64809A, JP No. 03-160008B and WO 95/04764A may be used. The acrylic rubber can be produced by emulsion polymerization, suspension polymerization, solution polymerization or bulk polymerization in the presence of a radical initiator.

Examples of the vinyl aromatic hydrocarbon compound-conjugated diene compound block copolymer rubber having a functional group reactive with the liquid crystal polyester include a rubber obtained by epoxidization of a block copolymer comprising (i) a sequence mainly composed of a vinyl aromatic hydrocarbon compound and (1i) a sequence mainly composed of a conjugated diene compound, and a rubber obtained by epoxidization of a hydrogenated of the block copolymer.

Examples of the vinyl aromatic hydrocarbon compound include styrene, vinyltoluene, dvinylbenzene, α-methylstyrbene, p-methylstyrene and vinylnaphthalene and the like. Among them, styrene is preferable.

Examples of the conjugated diene compound include butadiene, isoprene, 1,3-pentadiene, 3-butyl-1,3-octadiene and the like. Butadiene and isoprene are preferable.

The vinyl aromatic hydrocarbon compound-conjugated diene compound block copolymer and its hydrogenated product can be prepared by the known method, for example, described in JP No. 40-23798A and JP No. 59-133203A.

As a rubber used as the component (D-1), (meth)acrylate-ethylene-(unsaturated carboxylic acid glycidyl ester and/or unsaturated glycidyl ether) copolymer rubber is preferably used.

The rubber used as the component (D-1) may be vulcanized and used as a vulcanized rubber according to need.

Vulcanlzation of the (meth)acrylate-ethylene- (unsaturated carboxylic acid glycidyl ester and/or unsaturated glycidyl ether) copolymer rubber is accomplished by using a polyfunctional organic acid, a polyfunctional amine compound or an imidazole compound, but not limited thereto.

Examples of the thermoplastic resin having an epoxy group as the specific component (D-1) include an epoxy group-containing ethylene copolymer comprising (a) 50 to 99% by weight, preferably 55 to 98% by weight of the ethylene units, (b) 0.1 to 30% by weight, preferably 0.5 to 20% by weight of the unsaturated carboxylic acid glycidyl ester units and/or the unsaturated glycidyl ether units and (d) 0 to 50% by weight, preferably 0 to 45 % by weight of the ethylenically unsaturated ester units.

Examples of the ethylenically unsaturated ester compound (C) include carboxylic acid vinyl ester such as vinyl acetate, vinyl propionate, methyl acrylate, ethyl acrylate, butyl acrylate, methyl methacrylate, ethyl methacrylate and butyl methacrylate, and α,β-unsaturated carboxylic acid alkyl ester and the like. Vinyl acetate, methyl acrylate, and ethyl acrylate are particularly preferable.

Specific examples of the epoxy group-containing ethylene copolymer include a copolymer comprising ethylene units and glycidyl methacrylate units, a copolymer comprising ethylene units, glycidyl methacrylate units and methyl acrylate units, a copolymer comprising ethylene units, glycidyl methacrylate units and ethyl acrylate units, and a copolymer consisting of an ethylene unit, a glycidyl methacrylate unit and a vinyl acetate unit and the like.

A melt index (hereinafter referred to as "MFR", measured at 190°C under a load of 2.16 kg according to JIS K 6760) of the epoxy group-containing ethylene copolymer is preferably from 0.5 to 100 g/10 minutes, more preferably from 2 to 50 g/10 minutes. The melt index may not be within the above range. However, when the melt index is higher than the range, mechanical characteristics of the resultant composition are not preferred. On the other hand, when the melt index is less than the range, it is unfavorable from the point of adhesion.

The epoxy group-containing ethylene copolymer has a stiffness modulus preferably within the range of 10 to 1300 kg/cm², and more preferably 20 to 1100 kg/cm². When the stiffness modulus is not within this range, the moldability and mechanical properties of the resultant composition may be insufficient.

The epoxy group-containing ethylene copolymer is typically produced by polymerization under high pressure, in which an unsaturated epoxy compound and ethylene are copolymerized in the presence of a radical generating agent under 500 to 4000 atmospheres at 100 to 300°C in the presence or absence of appropriate solvent or a chain transfer agent. The copolymer may also be produced by mixing polyethylene and an unsaturated epoxy compound and a radical generating agent, and melt-graft copolymerizing them in an extruder.

The liquid crystal polyester resin composition (D) is a resin composition comprising a liquid crystal polyester (A-1) as a continuous phase and a copolymer (D-1) reactive with the liquid crystal polyester as a dispersion phase as described above. When the liquid crystal polyester (A-1) is not a continuous phase, gas-barrier property and heat resistance of the resultant molded multi-layer body may be considerably decreased. It is believed that, in such resin composition of the copolymer and the liquid crystal polyester, reaction between components (A-1) and (D-1) in the composition occurs, and the component (A-1) forms a continuousphase and the component (D-1) disperses finely therein, and thereby moldability of the composition is enhanced.

In one embodiment, the liquid crystal polyester resin composition (D) comprises: 56.0 to 99.9% by weight, preferably 65.0 to 99.9% by weight, more preferably 70 to 98% by weight of the liquid crystal polyester (A-1); and 44.0 to 0.1% by weight, preferably 35.0 to 0.1% by weight, more preferably 30 to 2% by weight of the copolymer (D-1) reactive with the liquid crystal polyester. In this context, the total of the components (A-1) and (D-1) is 100% by weight.

When the component (A-1) is less than the above range, vapor barrier property and heat resistance of a film made of the resultant composition may be decreased. When the component (A-1) is more than the above range, moldability of the composition tends to be decreased, and the composition tends to be expensive.

Any known method can be used for producing the liquid crystal polyester resin composition (D). For example, there can be used a process of mixing the respective components in a solution state and evaporating a solvent or precipitating them in the solvent. From an industrial point of view, a process of kneading the respective components of the composition in a molten state is preferred. There can be used single or double screw extruders and various kneading devices (e.g. kneader), which are generally used, for kneading with melting. Among them, a twin-screw high-speed kneader is particularly preferred.

In case of kneading with melting, a cylinder set temperature of the kneading device is preferably from 200 to 360°C, more preferably from 230 to 350°C

In case of kneading, the respective components may be uniformly mixing in advance with a device such as tumbler, Henschel mixer, etc. If necessary, there can also be used a process of separately feeding a predetermined amount of the respective components to a kneading device without mixing.

In the liquid crystal polyester used in the present invention, various additives such as organic fillers, antioxidants, heat stabilizers, photostabilizers, flame retardants, lubricants, antistatics, inorganic or organic colorants, rust preventives, cross-linking agents, fluorescent agents, surface smoothing agents, surface gloss modifiers, release modifiers (e.g., fluorine resin) can be optionally added in the production process or processing process thereafter.

Examples of the thermoplastic resin used in the layer (B) in the present invention include those comprising at least one resin selected from polyolefin (including an ethylene-α-olefin copolymer and the like), polystyrene, polycarbonate, polyester, polyacetal, polyamide, polyphenylene ether, polyethersulfone, ethylene-vinyl acetate copolymer, poly(vinyl chloride), poly(vinylidene chloride), poly(phenylene sulfide) and fluorine resin, and resins comprising polyolefin, polyester or polyamide are more preferable. In the case of using as a fuel vessel or fuel tube, among them, high-density polyethylene or polyamide is more preferably used.

In the present invention, when using the liquid crystal polyester resin composition (D) in the layer (A), the component (D-1) and the epoxy group-containing ethylene copolymer used in the adhesive layer (C) maybe the same copolymer, or may be different copolymers. When the component (D-1) and the epoxy group-containing ethylene copolymer used in the adhesive layer (C) are the same copolymer, a number of components consisting the molded multi-layer article of the present invention is decreased and reclaim properties such as burr are excellent, and it is favorable.

The molded multi-layer article in the present invention is at least three- or more-layered article in which the layer (A) comprising the liquid crystal polyester obtained by the method described above and the layer (B) comprising a thermoplastic resin other than the liquid crystal polymer are stacked via the adhesive layer (C). Other than the three-layered article, the present invention include a five-layered structure in which layers consisting of the thermoplastic resin are stacked via the adhesive layers (C) on the both sides of a layer consisting of the liquid crystal polyester and the like.

A method for manufacturing the shaped article of the present invention include, such as, a method of T-die extrusion, melt spinning, (co)-extrusion blow molding, or blown film extrusion.

When a hollow article required high barrier for gasoline or alcohol, which is desired recently in commercial, is produced, a blow molding is preferable. When a transporting tube required high barrier for gasoline or alcohol, tube molding method is preferable by using tubing die equipped with a pin and a die stipulated outer diameter and inner diameter.
The molded multi-layer article in the present invention includes various blow moldings. For example, the molded multi-layer article of the present invention can be obtained by a multi-layer blowing method, comprising: extruding the respective resins for the respective layers in the melted state from extruders into a same annular die having a same circular passage; layering the respective layers in the die and melt-extruding to form a pipe, or parison; and expanding the parison with gas pressure to adhere it to a mold before it is cooled.

When the molded multi-layer article in the present invention is a tubular molded multi-layer article, any known method can be used for producing it without specific limitation. For example, the tubular molded multi-layer body can be obtained by extruding the respective resins for the respective layers in the molten state from extruders into a same annular die having a same circular passage; layering the respective layers in the die and extruding into a cylindrical shape, and cooling and reeling, or obtained by extruding the resins with a multi-layer nozzle, molding, and the cutting into a tubular shape. The tubular molded multi-layer article may also be obtained by a press molding method, a T die extrusion method or a method of laminating multi-layer resin sheets obtained by, for example, an inflation molding. Alternatively, methods for obtaining a tubular molded multi-layer article by blow molding into a given shape as described in JP No. 02-84305A and JP No. 04-189528A may be applied. When the molded multi-layer article of the present invention is a laminated film, it may be produced by a standard laminated film forming method (e.g., a coextrusion molding method).

### EXAMPLES

The present invention will be illustrated by the following Examples in more detail.

### Measurement Method

Each values are obtained by the following method.
(i) Melt Flow Temperature
By using flow tester, CFT-500 type, made by Shimazu Corporation, melt flow temperature was defined as temperature at which melt viscosity was 48000 poise when heated resin heated by the heating rate of 4 0C/min was extruded under the load of 100kgf /cm² from a nozzle having 1mm diameter and 10mm length.
(ii) Melt Viscosity
Melt viscosity was measured by Capirograph 1B with nozzle diameter of 1mm manufactured by ToyoSeiki. Unless otherwise, share speed was 1000sec⁻¹.
(iii) Resin Pressure(blown film extrusion)
The resin pressure was measured at the die head when the resin was extruded into film by Laboplastmill manufactured by ToyoSeiki equipped with twin screwhaving 30mm diameter and blown extrusion die having 25mm of diameter and 1mm of die gap at the head.
(iv) Analysis of oligomer made up of five or less monomers
A resin as sample (about 2g) was placed in a 11ml vessel made of SUS, and was measured with high speed solvent extracting apparatus (manufactured by Dionexs Co. Ltd, ASE-200) under the following conditions.

| | |
|---|---|
| Extracting solvent: | 2-propanol (for HPLC) |
| Set temperature: | 140 °C |
| Set pressure: | 6.9 Mpa |
| Static time: | 10 min |
| Flush: | 100% (against 11ml cell) |
| N₂ purge: | 100 sec. |
| Cycle: | 2 |

The obtained 2-propanol solution containing oligomer made up of five or less monomers (total 30ml) with the extracting solution was concentrated under reduced pressure, and is 5 ml of constant volume by tetrahydrofurane, analyzed under the following conditions.

### Analyzing conditions

L-column ODS type column (4.6 mm of inner diameter, 15cm of length and filler diameter of 5 µm) manufactured by Chemicals Evaluation and Research Institute was packed to liquid chromatograph 1100 manufactured by Agilent Co., Ltd. 10µm of the sample containing oligomer made up of five or less monomers was injected and oligomer made up of five or less monomers was separated at 40°C of column temperature and 1.0 ml/min of flow rate under the gradient elution as mentioned later. The separated oligomer was introduced to ultraviolet detector attached to the liquid chromatograph and obtained sum of areas of the component detected at 254nm of detecting wavelength. The amount of the oligomer was determined in the term of p-hydroxybenzoic acid by a calibration curve obtained by the first approximation calibration curve of p-hydroxybenzoic acid as main monomer of resin.

The conditions of the gradient elution is as follows:
Mobile-phase is solution of water solution of 0.1% by weight and acetonitrile solution of 0.1% by weight of acetic acid. The ration of the acetonitrile solution was changed from 10%, 10%, 30%, 100%, and 100% at the time of 0 min, 10 min, 20min, 35min and 40 min after stating, respectively.

(v) Measurement of trace of foaming and amount of gel

A part of articles was cut off and was cut into 10mm square. After then, the trace of foam and gel was counted by eye. As standard of size of the trace of foam, it is determined whether the trace is bigger than the circle drawn on transparent resin plate as a circle having 2mm diameter of 3mm diameter.

### Reference Example 1

### (1) Liquid crystal polyester for the component (A)

p-Hydroxybenzoic acid, 16.6 kg (120 mol), 6-hydroxy-2-naphthoic acid, 8 . 4 kg (45mol), and acetic anhydrous, 18.6 kg (182 mol) were charged in a polymerization tank equipped with a comb-type stirring blade, the mixture temperature was elevated with stirring under nitrogen gas atmosphere, and then it was polymerized for 1 hour at 320°C and for additional 1 hour at 320°C under a reduced pressure of 2.0 torr. The acetic acid gas formed as a by-product during the polymerization was continuously removed from the reaction system. The reaction system was then slowly cooled and the resultant polymer was collected from the system at 180°C.

The obtained polymer was ground using a hammer mill manufactured by Hosokawa Micron Co., Ltd. to give particles having a particle size of not more than 2-5 mm. The resultant particles were further treated in a rotary kiln under nitrogen gas atmosphere for 5 hours at 240°C to obtain a particulate fully aromatic polyester comprising repeating structural units of the following formula (flow starting temperature: 274°C).

Hereinafter, the liquid crystal polyester is abbreviated to "A-1-1". This polymer showed an optical anisotropy at not less than 280°C under pressure.

A ratio of repeating structural units of the liquid crystal polyester A-1-1 is as follows:

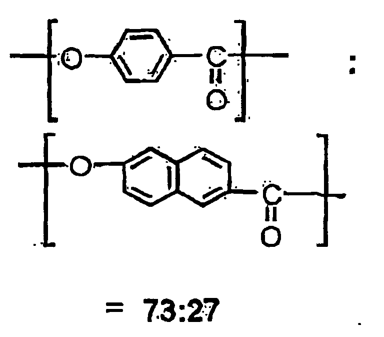

The "flow starting temperature" used herein means a temperature where a melt viscosity indicates 48,000 poise when a resin heated at a heating rate of 4°C/minute is extruded from a nozzle having an inner diameter of 1 mm and a length of 10 mm under a load of 100 kgf/cm² using a capillary rheometer (flow tester CFT-500 manufactured by Shimadzu Co.)

### (2) Component (D-1)

A rubber comprising methyl acrylate/ethylene/glycidyl methacrylate: 59.0/38.7/2.3 (weight ratio) having a Mooney viscosity of 15 was prepared, according to a method described in Example 5 in Japanese Patent Application Laid-Open No. 61-127709. Hereinafter, the rubber is abbreviated to "D-1-1",

The "Mooney viscosity" used herein refers a value measured with a large rotor at 100°C, according to JIS K 6300. The heat of melting was measured for 10 mg of a sample by using DSC-50 having a sensitivity of 0.01 J/g manufactured by Shimadzu Co. at a scanning temperature 10°C /min. The melting point was not detected, and the heat of melting could not be measured.

### (3) Components (D-1) and (C)

Bondfast 7L manufactured by Sumitomo Chemical Co. , Ltd. was used. The composition of the copolymer is methyl acrylate/ethylene/glycidyl methacrylate = 30/67/3(weight ratio). Hereinafter, the rubber is abbreviated to "D-1-2",

### (4) Measurement of tensile strength

A tube (in the case of a bottle, after a body was cut into a tube shape) was opened up along with a flowing direction, and cut into a test strip which was long in a flowing direction. The measurement was conducted with the test strip under the conditions of tensile rate of 5 mm/min. and a distance between holders of 50 mm by using an autograph manufactured by Shimadzu Co. A tensile stress (kgf/cm²) and a distortion (%) at the point of maximum loading obtained by the measurement were measured. An area enclosed by a curve represented by plotting with the horizontal axis representing a displacement and the vertical axis representing a value of loading, a perpendicular line dropped from the maximum point of the curve to the horizontal axis and the horizontal axis was calculated to determine a maximum energy (unit: kg·mm) for the maximum loading.

### (5) Test for adhesion between layers of a molded body

Layers of a molded multi-layer body were taken off by hands. Results were considered as ○ when the layers were difficult to be taken off and an adhesion strength resulting destruction of component members (material destruction) was achieved, or as × when the layers were easily taken off without material destruction.

### Reference Example 2

90% by weight of A-1-1 and 10% by weight of D-1-1 were mixed and melt-kneaded by using a twin-screw extruder (model TEX-30 manufactured by Japan Steel Works, LTD.) at a cylinder setting temperature of 290°C and a screw rotation frequency of 220 rpm to give composition pellets comprising A-1-1 as a continuous phase and D-1-1 as a dispersion phase. The pellets are abbreviated to "P-1".

### Reference Example 3

Composition pellets were obtained in the same manner as in Reference Example 2, except that D-1-2 was used instead of D-1-1. The composition pellets comprised A-1-1 as a continuous phase and D-1-2 as a dispersion phase. The pellets are abbreviated to "P-2".

### Reference Example 4

### Synthesis of maleic anhydrous-modified high density polyethylene.

To 10 kg of high density polyethylene (Idemitsu polyethylene 110 J (Registered Trademark) manufactured by Idemitsu Petrochemical Co., Ltd.) was added 500 g of maleic anhydrous, 50 g of styrene and 10g of 1,3-bis(t-butylperoxy isopropyl)benzene. The mixture was fully mixed, and then melt kneaded at 180 to 220°C by using a 30 mm-twin screw extruder manufactured by Ikegai K.K. equipped with a vacuum vent to give pellets. The pellets are abbreviated to "E-1".

### Example 1

In a multilayer direct blow apparatus, high density polyethylene (trade name: SHOLEX 4551 H manufactured by SHOWA DENKO K.K., MFR = 0.05 g/min, density = 0,945 g/cm3) was melted by using a single-screw extruder I for exterior molding having a screw diameter of 35 mmF at a cylinder setting temperature of 235°C and a rotation frequency of 30 rpm, the copolymer D-1-2 was melted by using a single-screw extruder II for exterior molding having a screw diameter of 30 mmF at a cylinder setting temperature of 220°C and a rotation frequency of 15 rpm, and the liquid crystal polyester A-1-1 was melted by using a single-screw extruder III for exterior molding having a screw diameter of 30 mmF at a cylinder setting temperature of 295°C and a rotation frequency of 10 rpm. Those melted resins were then separately flowed into a die head from the respective extruders and allowed to join in the die by a multimanifold method at a die setting temperature of 295°C to laminate the respective layers. The resultant laminate was extruded from the die into a mold and injected with air by a direct blowing to give a cylindrical bottle of 500 cc volume having a laminated structure in which the high density polyethylene layers were stacked on the both sides of the liquid crystal polyester (A-1-1) layer via adhesive (D-1-2) layers. The resultant bottle had good appearance. The result of the test for adhesion between layers of the resultant bottle is shown in Table 1.

### Example 2

A cylindrical bottle of 500 cc volume having a five-layered structure in which the high density polyethylene layers were stacked on the both sides of the liquid crystal polyester resin composition (P-2) layer via adhesive (D-1-2) layers was prepared in the same manner as in Example 1, except that the liquid crystal polyester resin composition (P-2) was used instead of the liquid crystal polyester (A-1-1). The resultant bottle had good appearance. The result of the test for adhesion between layers of the resultant bottle is shown in Table 1.

### Example 3

A cylindrical bottle was prepared in the same manner as in Example 2, except that P-1 was used instead of P-2. The resultant bottle had good appearance. The result of the test for adhesion between the layers of the resultant bottle is shown in Table 1.

### Comparative Example 1 (using an adhesive layer other than of the present invention)

A cylindrical bottle having a five-layered structure consisting of the maleic anhydrous-modified high density polyethylene and A-1-1 was prepared in the same manner as in Example 1, except that the maleic anhydrous -modifiedhigh density polyethylene was used as the adhesive layer. The result of the test for adhesion between the layers of the resultant bottle is shown in Table 1.

Each body of bottles obtained in Examples 1-3 and Comparative Example 1 was cut and opened up in a flowing direction. Strips were cut out and measured for tensile strength. Results are listed in Table 2.

### Example 4

Using a laminate tube molding apparatus comprising an extruder for an inner layer, an extruder for a middle layer, an extruder for an outer layer, a die collecting resins poured out from those three extruders and molding into a tube shape, a downsizing device for cooling the tube and controlling sizes and a haul-off machine and the like, a laminated tube having three-layered structure in which the inner liquid crystal polyester resin (A-1-1) layer and the outer high density polyethylene layers were stacked via the adhesive (D-1-2) layers was prepared by feeding the extruder for the inner layer having a screw diameter of 30 mmF set to a cylinder temperature of 295°C and a screw rotation frequency of 10 rpm with the liquid crystal polyester A-1-1, feeding the extruder for the outer layer having a screw diameter of 35 mmF set to a cylinder temperature of 235°C and a screw rotation frequency of 30 rpm with the high density polyethylene (trade name: SHOLEX 4551H manufactured by SHOWA DENKO K.K., MFR = 0.05 g/min, density = 0.945 g/cm³), feeding the extruder for the middle layer having a screw diameter of 30 mmF set to a cylinder temperature of 220°C and a screw rotation frequency of 15 rpm with the copolymer D-1-2, and melt-extruding downward with an annular die set to 295°C. The result of the test for adhesion between the layers of the resultant tube is shown in Table3. The resultant tube had a good appearance.

### Example 5

A laminated tube having three-layered structure in which the inner liquid crystal polyester resin composition (P-2) layer and the outer high density polyethylene layer were stacked via the adhesive (D-1-2) layers was prepared in the same manner as in Example 4, except that liquid crystal polyester resin composition (P-2) was used instead of the liquid crystal polyester (A-1-1). The result of the test for adhesion between the layers of the resultant tube is shown in Table3. The resultant tube had a good appearance.

### Comparative Example 2 (using an adhesive layer other than of the present invention)

A laminated tube having three-layered structure comprising maleic anhydrous-modified high density polyethylene and P-2 was prepared in the same manner as in Example 4, except that the maleic anhydrous-modified high density polyethylene was used as an adhesive layer. The result of the test for adhesion between layers of the resultant tube is shown in Table3.

The tubes obtained in Examples 4 to 5, and Comparative Example 2 were cut and opened up along with a flowing direction, and cut into test strips . Tensile strength thereof were measured. Results are listed in Table 4.

### Table 1

**Table 1**

| | Liquid crystal polymer layer | Adhesive layer | Thermoplastic resin layer | Adhesion |
|---|---|---|---|---|
| Example 1 | A-1-1 | D-1-2 | HDPE | ○ |
| Example 2 | P-2 | D-1-2 | HDPE | ○ |
| Example 3 | P-1 | D-1-2 | HDPE | ○ |
| Comparative Example 1 | A-1-1 | E-1 | HDPE | × |

**Table 2**

| | Maximum energy (kg·mm) | Tensile stress (kg/cm²) | Distortion (%) |
|---|---|---|---|
| Example 1 | 20 | 111 | 10.9 |
| Example 2 | 38 | 252 | 14.3 |
| Example 3 | 40 | 260 | 16.0 |
| Comparative Example 1 | 10 | 105 | 7.5 |

| | | | |
|---|---|---|---|
| Strength conclusion | | | |

**Table 3**

| | Liquid crystal polymer layer | Adhesive layer | Thermoplastic resin layer | Adhesion |
|---|---|---|---|---|
| Example 4 | A-1-1 | D-1-2 | HDPE | ○ |
| Example 5 | P-2 | D-1-2 | HDPE | ○ |
| Comparative Example 2 | A-1-1 | E-1 | HDPE | × |

**Table 4**

| | Maximum energy (kg.mm) | Tensile stress (kg/cm²) | Distortion (%) |
|---|---|---|---|
| Example 4 | 21 | 248 | 12.2 |
| Example 5 | 40 | 376 | 16.5 |
| Comparative Example 2 | 14 | 200 | 10.9 |

| | | | |
|---|---|---|---|
| Strength of a molded tube | | | |

### Reference Example 5

### (1) Liquid crystal polyester for the component (A-1)

p-Hydroxybenzoic acid, 1208.9 g (8.76 mol), 6-hydroxy-2-naphthoic acid,609.1 g (3.24 mol), and acetic anhydrous, 1346.4 g (13.2 mol) were charged in a polymerization tank equipped with a comb-type stirring blade, the mixture temperature was elevated with stirring under nitrogen gas atmosphere, and then it was polymerized for 3 hour at 150°C, raising the temperature to 320 °C at the rate of 1 0C/min, and for additional 1 hour at 320°C. The acetic acid gas formed as a by-product during the polymerization was continuously removed from the reaction system. The reaction system was then slowly cooled and the resultant polymer was collected from the system at 180°C.

Hereinafter, the liquid crystal polyester is abbreviated to "A-1". This polymer showed an optical anisotropy at not less than 280°C under pressure. And the total amount of oligomers made up of five or less monomers was 1000ppm by weight to the A-1.

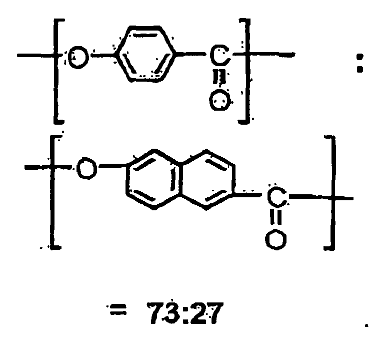

### Reference Example 6

The same procedure as Reference Example 5 was repeated, but the polymerization at 320 0C was stopped for 5 minutes and obtained oligomer. The obtained oligomer was ground using a hammer mill manufactured by Hosokawa Micron Co., Ltd. to give particles having a particle size of not more than 2.5 mm. The obtained oligomer was made up of eight or less monomers.

### Example 6 (Blow film extrusion)

By using TEX-30 type twin extruder manufactured by Nippon Seikou KK having thereducedpart at the cylinder section, pellets were obtained by deaeration melt-kneading at 305 0C of cylinder section, 250 rpm of screw rotation and reduced pressure of 0.04 MP. The flow temperature of the pellets was 270 0 and showed optical anisotropy at not less than 280 0C under pressure. The pellets was sometimes referred as A-2. The oligomers made up of five or less monomers contained in A-2 is 250 ppm by weight to A-2.

A-2 was extruded by single screw extruder equipped with 60mmf of circular die at the 300 °C of the cylinder temperature, 60rpm of screw rotation and melt resin was extruded upper side from the circular die having 50mm diameter, 1.0mm of lip gap and 290 °C of die temperature, obtained cylindrical film was blown with the dried air by introducing it into the hollow portion, and then through the nip roll after cooling to obtain film. Blow ratio is 4, draw down ration is 10, and average thickness is 26 µm. There were fewer gels on the surface of the film and the trace of foaming. The number of the trace of foaming was 0 in the 10mm square by eye.

### Comparative Example 3

A-1 was melt-kneaded under the nomal pressure using the same apparatus used in the Example 6 to obtain pellets. The flow temperature of the pellets was 270 ° and showed optical anisotropy at not less than 280 °C under pressure. The pellets was sometimes referred as A-3. The oligomers made up of five or less monomers contained in A-3 is 800 ppm by weight to A-3.

A-3 was extruded by single screw extruder equipped with 60mmf of circular die at the 300 °C of the cylinder temperature, 60rpm of screw rotation and melt resin was extruded upper side from the circular die having 50mm diameter, 1.0mm of lip gap and 290 °C of die temperature, obtained cylindrical film was blown with the dried air by introducing it into the hollow portion, and then through the nip roll after cooling to obtain film. Blow ratio is 4, draw down ration is 10, and average thickness is 26 µm. There were a lot of the trace of foaming. The number of the trace of foaming was 23 having not more than 2 mm of diameter, 1 having between 2 to 3 mm of diameter, and 0 having not less than 3 mm diameter, in the 10mm square by eye.

### Comparative Example 4

The oligomer obtained in Reference Example 6 (0.1 parts by weight) was added to the pellets of A-1 obtained in Reference Example 5 to contain 1800 ppm of total amount of the oligomer made up of five of less monomers, was melt-kneaded under the nomal pressure using the same apparatus used in the Example 6 to obtain pellets. The flow temperature of the pellets was 270 0 and showed optical anisotropy at not less than 280 °C under pressure. The pellets was sometimes referred as A-4.
A-4 was extruded by single screw extruder equipped with 60mmf of circular die at the 300 °C of the cylinder temperature, 60rpm of screw rotation and melt resin was extruded upper side from the circular die having 50mm diameter, 1.0mm of lip gap and 290 °C of die temperature, obtained cylindrical film was blown with the dried air by introducing it into the hollow protion, and then through the nip roll after cooling to obtain film. Blow ratio is 4, draw down ration is 10, and average thickness is 26 µm. There were a lot of the trace of foaming. The number of the trace of foaming was 35 having not more than 2 mm of diameter, 2 having between 2 to 3 mm of diameter, and 0 having not less than 3 mm diameter, in the 10mm square by eye.
During the process of forming film, the resin pressure was not stable, and bubble was blowout at the trace of foaming resulting in the large change of the shape of bublle.

### Example 7

Using a blow molding apparatus BM-304 type fanufactured by Placo KK having a screw diameter of 50 mm, A-2 obtained in Example 5 was extruded under the conditions of set to a cylinder temperature of 295°C, a screw rotation frequency of 30 rpm, die diameter of 25.5 mm, nozzle diameter of 22 mm, die temperature of 295 °C, blowing air pressure of 2.2 kgf/cm2, cycle time of 25 sec, and cooling time of 15 sec to obtain 500 cc of circular bottle. The resultant bottle had a good appearance, and there was no trace of foaming.

### Comparative Example 5

The same procedure was repeated except that A-1 was used as liquid polyester obtained in Example 5 to obtain circular bottle. There was the trace of foaming on the surface. By cutting out the bottle and the liquid polyester layer was made plat by hot press, and then counting the trace of foaming. There were 10 traces having not more than 10 mm diameter in 10 mm square. Additionally, when air was blown to obtain bottle, the bottle was not able to obtain because of blowout at the trace of foaming.

### Example 8

Using a multi-layer blow molding apparatus BM-304 type having a screw diameter of 50 mm, A-2 obtained in Example 5 was extruded under the conditions of set to a cylinder temperature of 290 °C, a screw rotation frequency of 30 rpm, and high density polyethylene B3000 made by Mitsui Chemical Co., Ltd. was extruded from the other extruder having a screw diameter of 70 mm under the conditions of set to a cylinder temperature of 260 °C, a screw rotation frequency of 20 rpm, and further Bondfast 7L made by Sumitomo Chemical Co., Ltd. was extruded from the other extruder having a screw diameter of 40 mm under the conditions of set to a cylinder temperature of 170 °C, a screw rotation frequency of 20 rpm, was limited to multi-layer in the multi layer die having die diameter of 25.5 mm, nozzle diameter of 22 mm, die temperature of 295 °C, blowing air pressure of 2.2 kgf/cm2, cycle time of 25 sec, and cooling time of 15 sec to obtain 500 cc of circular bottle having high density polyethylene layer, bondfast layer liquid polyester layer from inner in this order. The resultant bottle had a good appearance, and there was no trace of foaming.

According to the present invention, a molded multi-layer body is provided, which has a layer comprising a liquid crystal polymer being excellent in strength, or film or blow molding article having excellent appearance.

## Claims

1. A shaped article comprising a liquid crystal polyester containing not more than 500 ppm of oligomer made up of five or less monomers.

2. A shaped article comprising two or more thermoplastic resin layers and one or more adhesive layers, wherein at least one of the thermoplastic resin layers is a layer (A) comprising a liquid crystal polyester containing not more than 500 ppm of oligomer made up of five or less monomers, at least one of the thermoplastic resin layers is a layer (B) comprising thermoplastic resin other than the liquid crystal polymer, and the layer (A) and the layer (B) are stacked via an adhesive layer (C) comprising an epoxy group-containing ethylene copolymer comprising:
(a) 50 to 99% by weight of an ethylene unit;
(b) 0.1 to 30% by weight of an unsaturated carboxylic acid glycidyl ester unit and/or an unsaturated glycidyl ether unit; and
(c) 0 to 50% by weight of a (meth)acrylate unit.

3. A shaped article according to claim 2, wherein the layer (A) comprises a liquid crystal polyester resin composition (D) comprising a liquid crystal polyester (A-1) as a continuous phase and a copolymer (D-1) reactive with the liquid crystal polyester as a dispersion phase.

4. A shaped article according to claim 3, wherein the liquid crystal polyester resin composition (D) comprises 56.0 to 99.9% by weight of the liquid crystal polyester (A-1) and 44.0 to 0.1% by weight of the copolymer (D-1) reactive with the liquid crystal polyester.

5. A shaped article according to claim 3 or 4, wherein the copolymer (D-1) reactive with the liquid crystal polyester is a copolymer having an epoxy group, an oxazolyl group or an amino group.

6. A shaped article according to claim 3 or 4, wherein the copolymer (D-1) reactive with the liquid crystal polyester is a copolymer having an unsaturated carboxylic acid glycidyl ester unit and/or an unsaturated glycidyl ether unit.

7. A shaped article according to claim 3 or 4, wherein the copolymer (D-1) reactive with the liquid crystal polyester comprises a (meth)acrylate-ethylene-(unsaturated carboxylic acid glycidyl ester and/or unsaturated glycidyl ether) copolymer rubber.

8. A shaped article according to claim 3 or 4, wherein the copolymer (D-1) reactive with the liquid crystal polyester is an epoxy group-containing ethylene copolymer comprising:
(a) 50.0 to 99.9% by weight of an ethylene unit,
(b) 0.1 to 30.0% by weight of an unsaturated carboxylic acid glycidyl ester unit and/or an unsaturated glycidyl ether unit, and
(d) 0 to 49.9% by weight of an ethylenically unsaturated ester unit.

9. A shaped article according to any one of claims 3 to 8, wherein the copolymer (D-1) reactive with the liquid crystal polyester and the epoxy group-containing ethylene copolymer of the adhesive layer (C) are the same copolymer.

10. A shaped article according to any one of claims 2 to 9, wherein the thermoplastic resin in the layer (B) is a high density polyethylene and/or a polyamide.

11. A shaped article according to any one of claims 1 to 10, which is molded by a blow molding.

12. A shaped article according to any one of claims 1 to 10, which is a tubular molded multi-layer body or a laminated film prepared by a coextrusion molding method.

13. A shaped article according to any one of claims 1 to 12, which is a fuel vessel.

14. A shaped article according to any one of claims 1 to 12, which is a fuel tube.

## Patentansprüche

1. Formgegenstand, umfassend einen Flüssigkristallpolyester, der nicht mehr als 500 ppm eines Oligomers enthält, welches aus fünf oder weniger Monomeren besteht.

2. Formgegenstand, umfassend zwei oder mehrere thermoplastische Harzschichten und eine oder mehrere Klebschichten, wobei mindestens eine der thermoplastischen Harzschichten eine Schicht (A) ist, umfassend ein Flüssigkristallpolyester, der nicht mehr als 500 ppm eines Oligomers enthält, welches aus fünf oder weniger Monomeren besteht, mindestens eine der thermoplastischen Harzschichten eine Schicht (B) ist, umfassend ein thermoplastisches Harz, welches vom Flüssigkristallpolymer verschieden ist, und die Schicht (A) und die Schicht (B) über eine Klebschicht (C) geschichtet sind, welche ein eine Epoxygruppe enthaltendes Ethylencopolymer umfasst, umfassend:
(a) 50 bis 99 Gew.-% einer Ethyleneinheit;
(b) 0,1 bis 30 Gew.-% einer ungesättigten Carbonsäureglycidylester-Einheit und/oder einer ungesättigten Glycidylether-Einheit; und
(c) 0 bis 50 Gew.-% einer (Meth)acrylat-Einheit.

3. Formgegenstand nach Anspruch 2, wobei die Schicht (A) eine Flüssigkristallpolyesterharzzusammensetzung (D) umfasst, welche ein Flüssigkristallpolyester (A-1) als kontinuierliche Phase und ein Copolymer (D-1), welches mit dem Flüssigkristallpolyester reaktiv ist, als dispergierte Phase umfasst.

4. Formgegenstand nach Anspruch 3, wobei die Flüssigkristallpolyesterharzzusammensetzung (D) 56,0 bis 99,9 Gew.-% des Flüssigkristallpolyesters (A-1) und 44,0 bis 0,1 Gew.-% des Copolymers (D-1), welches mit dem Flüssigkristallpolyester reaktiv ist, umfasst.

5. Formgegenstand nach Anspruch 3 oder 4, wobei das Copolymer (D-1), das mit dem Flüssigkristallpolyester reaktiv ist, ein Copolymer mit einer Epoxygruppe, einer Oxazolylgruppe oder eine Aminogruppe ist.

6. Formgegenstand nach Anspruch 3 oder 4, wobei das Copolymer (D-1), das mit dem Flüssigkristallpolyester reaktiv ist, ein Copolymer mit einer ungesättigten Carbonsäureglycidylester-Einheit und/oder einer ungesättigten Glycidylether-Einheit ist.

7. Formgegenstand nach Anspruch 3 oder 4, wobei das Copolymer (D-1), das mit dem Flüssigkristallpolyester reaktiv ist, einen (Meth)acrylat-Ethylen-(ungesättigter Carbonsäureglycidylester und/oder ungesättigter Glycidylether)-Copolymerkautschuk umfasst.

8. Formgegenstand nach Anspruch 3 oder 4, wobei das Copolymer (D-1), das mit dem Flüssigkristallpolyester reaktiv ist, ein eine Epoxygruppe enthaltendes Ethylencopolymer ist, umfassend:
(a) 50,0 bis 99,9 Gew.-% einer Ethylen-Einheit;
(b) 0,1 bis 30,0 Gew.-% einer ungesättigten Carbonsäureglycidylester-Einheit und/oder einer ungesättigten Glycidylether-Einheit; und
(d) 0 bis 49,9 Gew.-% einer ethylenisch ungesättigten Estereinheit.

9. Formgegenstand nach einem der Ansprüche 3 bis 8, wobei das Copolymer (D-1), das mit dem Flüssigkristallpolyester und dem Epoxygruppen enthaltenden Ethylencopolymer der Klebschicht (C) reaktiv ist, das gleiche Copolymer ist.

10. Formgegenstand nach einem der Ansprüche 2 bis 9, wobei das thermoplastische Harz in Schicht (B) ein Polyethylen hoher Dichte und/oder ein Polyamid ist.

11. Formgegenstand nach einem der Ansprüche 1 bis 10, der durch Blasformen geformt wird.

12. Formgegenstand nach einem der Ansprüche 1 bis 10, welcher ein röhrenförmiger Mehrschichtkörper oder eine laminierte Folie ist, hergestellt durch ein Coextrusionsformverfahren.

13. Formgegenstand nach einem der Ansprüche 1 bis 12, der ein Kraftstoffbehälter ist.

14. Formgegenstand nach einem der Ansprüche 1 bis 12, der ein Kraftstoffschlauch ist.

## Revendications

1. Article mis en forme comprenant un polyester cristallin liquide ne contenant pas plus de 500 ppm d'oligomère constitué par cinq monomères ou moins.

2. Article mis en forme comprenant deux ou plusieurs couches de résine thermoplastique et une ou plusieurs couches adhésives, où au moins l'une des couches de résine thermoplastique est une couche (A) comprenant un polyester cristallin liquide ne contenant pas plus de 500 ppm d'oligomère constitué par cinq monomères ou moins, au moins l'une des couches de résine thermoplastique est une couche (B) comprenant une résine thermoplastique différente du polymère cristallin liquide, et la couche (A) et la couche (B) sont empilées via une couche adhésive (C) comprenant un copolymère de l'éthylène contenant des groupes époxy comprenant :
(a) 50 à 99 % en masse d'une unité d'éthylène ;
(b) 0,1 à 30 % en masse d'une unité de glycidylester d'acide carboxylique insaturé et/ou d'une unité de glycidyléther insaturé ; et
(c) 0 à 50 % en masse d'une unité de (méth)acrylate.

3. Article mis en forme selon la revendication 2, où la couche (A) comprend une composition de résine de polyester cristallin liquide (D) comprenant un polyester cristallin liquide (A-1) comme phase continue et un copolymère (D-1) réactif avec le polyester cristallin liquide comme phase de dispersion.

4. Article mis en forme selon la revendication 3, où la composition de résine de polyester cristallin liquide (D) comprend 56,0 à 99,9 % en masse du polyester cristallin liquide (A-1) et 44,0 à 0,1 % en masse du copolymère (D-1) réactif avec le polyester cristallin liquide.

5. Article mis en forme selon la revendication 3 ou 4, où le copolymère (D-1) réactif avec le polyester cristallin liquide est un copolymère ayant un groupe époxy, un groupe oxazolyle ou un groupe amino.

6. Article mis en forme selon la revendication 3 ou 4, où le copolymère (D-1) réactif avec le polyester cristallin liquide est un copolymère ayant une unité de glycidylester d'acide carboxylique insaturé et/ou une unité de glycidyléther insaturé.

7. Article mis en forme selon la revendication 3 ou 4, où le copolymère (D-1) réactif avec le polyester cristallin liquide comprend un caoutchouc de copolymère (méth)acrylate-éthylène-(glycidylester d'acide carboxylique insaturé et/ou glycidyléther insaturé).

8. Article mis en forme selon la revendication 3 ou 4, où le copolymère (D-1) réactif avec le polyester cristallin liquide est un copolymère de l'éthylène contenant des groupes époxy comprenant :
(a) 50,0 à 99,9 % en masse d'une unité d'éthylène,
(b) 0,1 à 30,0 % en masse d'une unité de glycidylester d'acide carboxylique insaturé et/ou d'une unité de glycidyléther insaturé, et
(d) 0 à 49,9 % en masse d'une unité d'ester éthyléniquement insaturé.

9. Article mis en forme selon l'une quelconque des revendications 3 à 8, où le copolymère (D-1) réactif avec le polyester cristallin liquide et le copolymère de l'éthylène contenant des groupes époxy de la couche adhésive (C) sont le même copolymère.

10. Article mis en forme selon l'une quelconque des revendications 2 à 9, où la résine thermoplastique dans la couche (B) est un polyéthylène haute densité et/ou un polyamide.

11. Article mis en forme selon l'une quelconque des revendications 1 à 10 qui est moulé par extrusion-soufflage.

12. Article mis en forme selon l'une quelconque des revendications 1 à 10 qui est un corps multicouche moulé tubulaire ou un film stratifié préparé par un procédé de moulage par co-extrusion.

13. Article mis en forme selon l'une quelconque des revendications 1 à 12, qui est un récipient à carburant.

14. Article mis en forme selon l'une quelconque des revendications 1 à 12, qui est un tube à carburant.
